# FASCICULE DE BREVET EUROPEEN

(11) **EP 1 279 877 B1**
(45) Date de publication et mention de la délivrance du brevet: **27.04.2005**
(21) Numéro de dépôt: 02291826.2
(22) Date de dépôt: 18.07.2002
(51) Int. Cl.: F16L 5/10

(54) **Ensemble de traversée de paroi**
Anordnung einer Wanddurchführung
Assembly of a wall feedthrough

(30) Priorité: 26.07.2001 FR 0110006
(43) Date de publication de la demande: 29.01.2003
(73) Titulaire: Valeo Electronique et Systemes de Liaison, 78180 Montigny le Bretonneux (FR)
(72) Inventeur: Faik, Mounir, 51100 Reims (FR); Senard, Didier, 02200 Belleu (FR)
(74) Mandataire: Faber, Jean-Paul

(56) Documents cités:
- WO-A-88/04621
- DE-A- 19 950 812
- FR-A- 2 744 781
- US-A- 5 213 290

## Description

L'invention se rapporte à un ensemble de traversée de paroi c'est-à-dire à un ensemble destiné au guidage et à la fixation d'un faisceau de conducteurs devant traverser un trou d'une cloison séparant le compartiment moteur de l 'habitacle d'un véhicule (voir, par exemple, DE-A- 199 50 812).

L'invention vise des ensembles de traversée de paroi dans lesquelles le faisceau de conducteurs est noyé dans un corps de matière plastique surmoulé.

Dans la technique antérieure, on a réalisé directement, par surmoulage, un corps permettant la fixation sur la cloison. On a constaté qu'une telle réalisation présentait l'inconvénient de présenter, au droit des plans de joint, des légers défauts de sorte que le montage n'était pas étanche.

L'un des buts de la présente invention est de remédier à cet inconvénient.

L'ensemble, selon l'invention, est destiné à être monté dans un trou d'une cloison séparant le compartiment moteur de l'habitacle d'un véhicule de manière à guider et à fixer un faisceau de conducteurs et dans lequel le faisceau est noyé dans un corps de matière plastique surmoulé, l'ensemble comprenant une première bague présentant une flasque dont une face présente une gorge dans laquelle est logé un joint destiné à porter contre une face de la cloison, ladite flasque présentant une ouverture à partir de laquelle s'étend, du côté de la face pourvue du joint, un manchon destiné à recevoir un anneau de fixation présentant des crochets destinés à coopérer avec le bord dudit trou de la cloison, l'ensemble bague et anneau de fixation étant traversé par le faisceau de câbles, le corps, en matière plastique surmoulé sur ledit faisceau, incluant la surface interne du manchon.

Grâce à cette disposition, on réalise un montage parfaitement étanche.

De préférence, le manchon présente, sur sa face interne, des reliefs. Ainsi, on assure un ancrage du manchon dans le corps surmoulé.

Suivant un mode de réalisation particulier, le corps, à son extrémité libre, comporte une collerette souple et élastique. Ainsi, lors de la pose, la collerette est repliée afin de passer dans le trou de la cloison celle-ci revenant ensuite dans sa position initiale pour s'appliquer contre une épaisseur de matière isolante et antibruit.

Suivant une variante de réalisation, le corps comporte, à son extrémité libre, une gorge, la collerette étant constituée par une rondelle souple et élastique montée élastiquement dans la gorge.

Grâce à cette disposition, on peut aisément, après la pose dans le trou de la paroi, mettre en place la collerette.

L'invention va maintenant être décrite avec plus de détails en se référant à des modes de réalisation particuliers donnés à titre d'exemple seulement et représentés aux dessins annexés, dans lesquels :

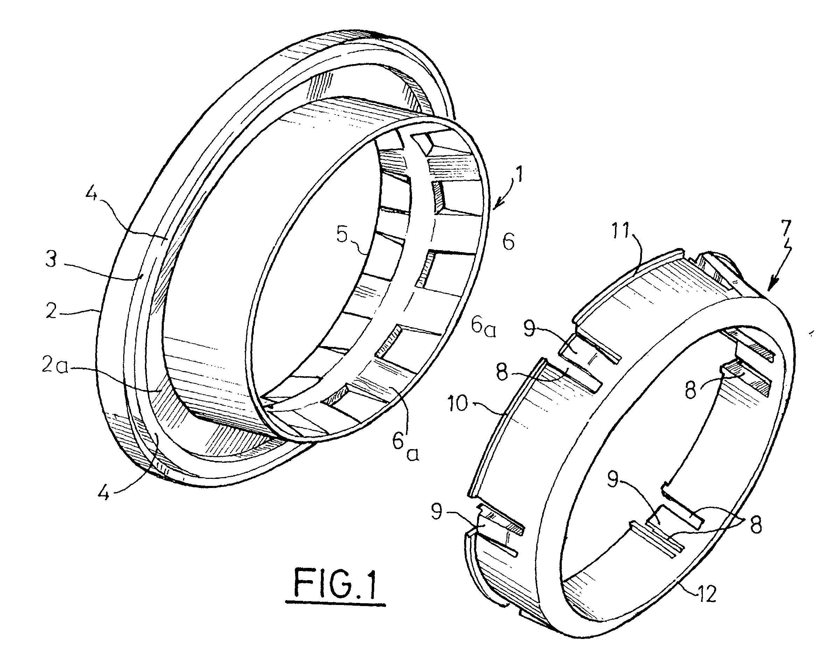

Figure 1 est une vue en perspective montrant la bague et l'anneau de fixation.

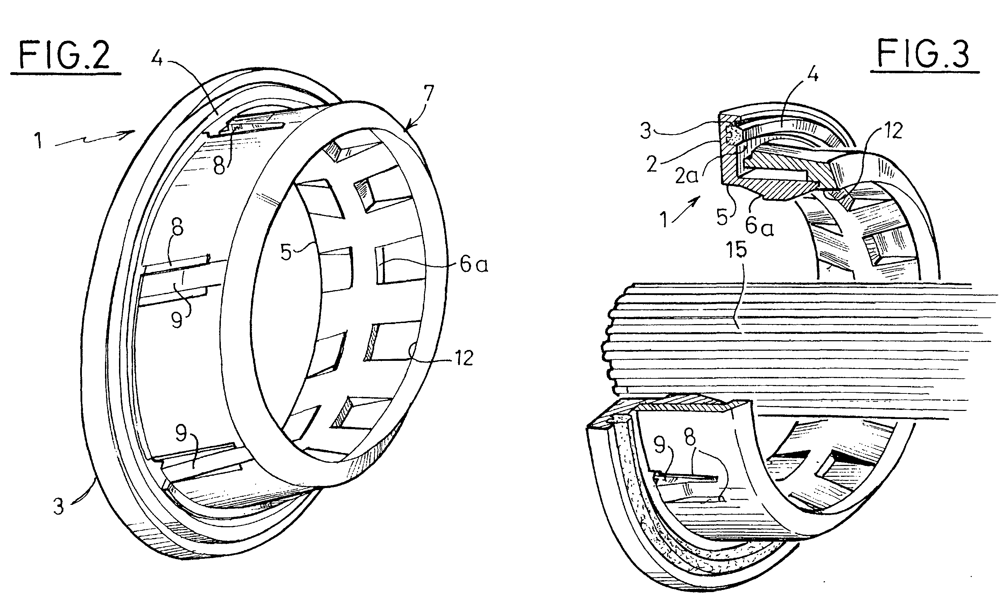

Figure 2 montre l'anneau de fixation monté sur le manchon de la bague.
Figure 3 est une vue partiellement en coupe montrant le montage de l'anneau de fixation sur le manchon de la bague.

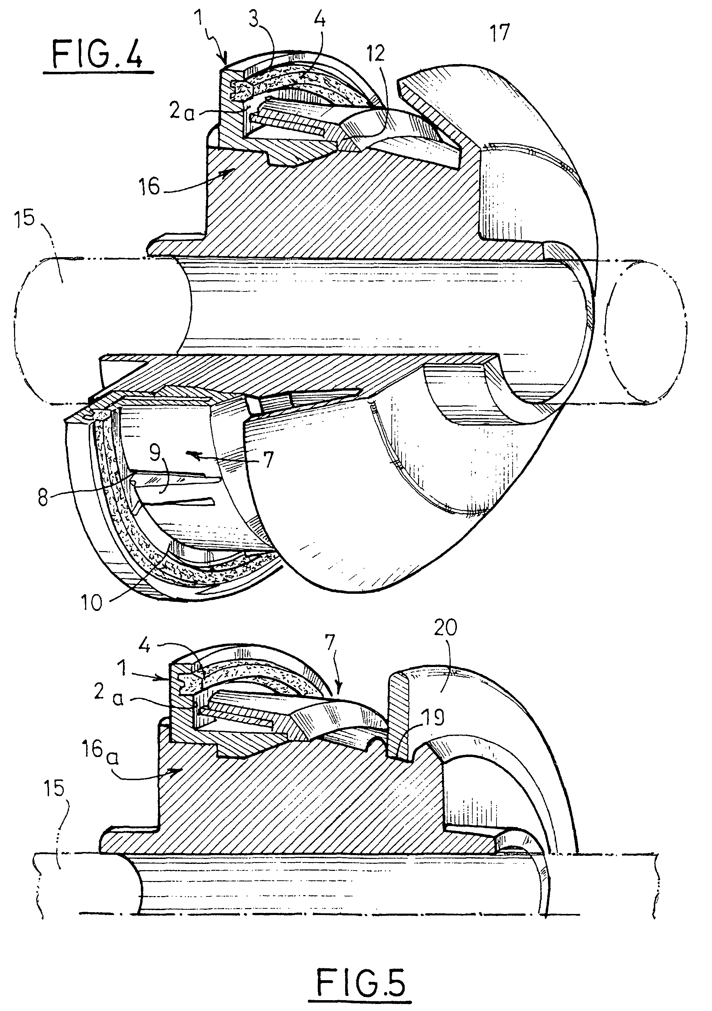

Figure 4 montre en perspective partiellement en coupe l'ensemble de traversée de paroi, selon l'invention.
Figure 5 est une vue en perspective montrant une variante de réalisation.

L'ensemble de traversée de paroi représenté aux figures comprend une première bague 1 présentant une flasque 2 dont une face 2a présente une gorge 3 dans laquelle est logé un joint 4, ladite flasque présentant une ouverture 5 prolongée, du côté de la face 2a, par un manchon 6 dont la surface interne comporte des reliefs 6a.

Sur le manchon 6 est monté un anneau de fixation 7 réalisé en matière plastique moulée et présentant, régulièrement espacées, des paires de fentes 8 délimitant des crochets de fixation 9. A une extrémité, l'anneau de fixation 7 comporte un rebord 11 destiné à venir buter contre la face 2a de la flasque 2, et, à son autre extrémité, un bourrelet interne 12 destiné à venir coopérer avec le bord libre du manchon 6.

Lorsque ces deux éléments sont assemblés, on met en place un faisceau de conducteurs 15 de manière qu'il traverse l'ouverture 5, ledit faisceau et les éléments 1 et 7 étant placés dans un moule dans lequel on injecte une matière plastique de manière à former un corps 16. Lors du surmoulage, les reliefs 6a assurent l'ancrage de la bague sur le corps 16.

Le faisceau 15 est ainsi entièrement noyé dans le corps 16 qui présente, à une extrémité, une collerette 17. La collerette 17 est souple et peut être déformée de manière à permettre de monter l'ensemble dans un trou d'une paroi, le joint 4 pourtant contre la paroi tandis que les crochets 9 coopèrent avec le bord du trou pour assurer la fixation sur la paroi.

Entre la paroi et la collerette 17 est insérée une cloison destinée à amortir le bruit.

A la figure 5, on a représenté une variante de réalisation dans laquelle le corps 16a ne comporte pas de collerette, mais est pourvue d'une gorge 19 dans laquelle on insère une collerette 20 moulée à part et constituée par une rondelle 20 souple et élastique montée élastiquement dans la gorge 19.

Bien entendu, l'invention n'est pas limitée aux modes de réalisation qui viennent d'être décrits et représentés. On pourra y apporter de nombreuses modifications de détail sans sortir pour cela du cadre de l'invention telle que revendiquée.

## Revendications

1. Ensemble de traversée de paroi destiné à être monté dans un trou d'une cloison séparant le compartiment moteur de l'habitacle d'un véhicule de manière à guider et à fixer un faisceau de conducteurs et dans lequel le faisceau est noyé dans un corps (16) de matière plastique sur-moulé, l'ensemble comprenant une première bague (1) présentant une flasque (2) dont une face (2a) présente une gorge (3) dans laquelle est logé un joint (4) destiné à porter contre une face de la cloison, ladite flasque présentant une ouverture à partir de laquelle s'étend, du côté de la face (2a) pourvue du joint (4), un manchon (6) destiné à recevoir un anneau de fixation (7) présentant des crochets (9) destinés à coopérer avec le bord dudit trou de la cloison, l'ensemble bague (1) et anneau de fixation (7) étant traversé par le faisceau de câbles (15), le corps (16) en matière plastique, surmoulé sur ledit faisceau, incluant la surface interne du manchon (6).

2. Ensemble de traversée de paroi, selon la revendication 1, **caractérisé en ce que** le manchon présente, sur sa face interne, des reliefs (6a).

3. Ensemble de traversée de paroi, selon la revendication 1, **caractérisé en ce que** le corps (16), à son extrémité libre, comporte une collerette souple (17, 20) et élastique.

4. Ensemble de traversée de paroi, selon les revendications 1 et 3, **caractérisé en ce que** le corps (16) comporte, à son extrémité libre, une gorge (19), la collerette étant constituée par une rondelle (20) souple et élastique montée élastiquement dans la gorge (19) du corps (16).

## Patentansprüche

1. Anordnung einer Wanddurchführung, die dazu vorgesehen ist, in einer Öffnung einer Trennwand, die den Motorraum vom Karosseriegehäuse eines Fahrzeuges trennt, angebracht zu werden, um ein Leiterbündel zu führen und zu befestigen, wobei das Bündel in einen Körper (16) aus aufgegossenem, plastischem Material eingebettet ist und wobei die Anordnung einen ersten Ring (1) aufweist, der einen Flansch (2) besitzt, dessen eine Seite (2a) eine Vertiefung (3) aufweist, in der eine Dichtung (4) sitzt, die zur Anlage an einer Seite der Trennwand bestimmt ist, wobei genannter Flansch eine Öffnung aufweist, von der sich auf der mit der Dichtung (4) versehenen Seite (2a) eine Muffe (6) weg erstreckt, die zur Aufnahme eines Befestigungsringes (7) vorgesehen ist, der Haken (9) aufweist, die zur Zusammenwirkung mit dem Rand der genannten Öffnung der Trennwand vorgesehen sind, wobei die Einheit aus Ring (1) und Befestigungsring (7) durch das Kabelbündel (15) durchgriffen ist und der Körper (16) aus auf das genannte Bündel aufgegossenem plastischen Material die Innenfläche der Muffe (6) umschließt.

2. Anordnung einer Wanddurchführung nach Anspruch 1, **dadurch gekennzeichnet, dass** die Muffe an ihrer innenseite Erhebungen (6a) aufweist.

3. Anordnung einer Wanddurchführung nach Anspruch 1, **dadurch gekennzeichnet, dass** der Körper (16) an seinem freien Ende einen weichen und elastischen Kragen (17, 20) aufweist.

4. Anordnung einer Wanddurchführung nach den Ansprüchen 1 und 3, **dadurch gekennzeichnet, dass** der Körper (16) an seinem freien Ende eine Rille (19) aufweist, wobei der Kragen durch eine weiche und elastische Ringscheibe (20) gebildet ist, die in die Rille (19) des Körpers (16) elastisch eingebaut ist.

## Claims

1. A wall feed-through assembly intended to be mounted in a hole of a partition separating the engine compartment from the passenger compartment of a vehicle so as to guide and to fix a bundle of wires and in which the bundle is embedded in a moulded body (16) of plastic material, the said assembly comprising a first ring (1) having a flange (2), one face (2a) of which has a groove (3) in which is housed a seal (4) intended to bear against a face of the partition, the said flange having an opening from which extends, on the side of the face (2a) fitted with the seal (4), a sleeve (6) intended to receive a ring fastener (7) having hooks (9) intended to cooperate with the edge of the said hole of the partition, the ring (1) and ring fastener (7) assembly being traversed by the cable assembly (15), the body (16) made of plastic material, moulded onto the said cable assembly, including the internal surface of the sleeve (6).

2. A wall feed-through assembly according to Claim 1,
**characterised in that** the sleeve has reliefs (6a) on its internal face.

3. A wall feed-through assembly according to Claim 1,
**characterised in that** the body (16) comprises a flexible, elastic skirt (17, 20) at its free end.

4. A wall feed-through assembly according to Claims 1 and 3,
**characterised in that** the body (16) comprises a groove (19) at its free end, the skirt being formed by a flexible, elastic collar (20) mounted elastically in the groove (19) of the body (16).
